# EUROPÄISCHE PATENTANMELDUNG

(11) **EP 1 193 224 A1**
(43) Veröffentlichungstag der Anmeldung: **03.04.2002**
(21) Anmeldenummer: 00121180.4
(22) Anmeldetag: 29.09.2000
(51) Int. Cl.: C03B 23/217, C03B 11/06, C03B 11/10

(54) **Dreidimensionaler, muldenartiger Glaskörper**

(71) Anmelder: Schott Glas, 55122 Mainz (DE); CARL-ZEISS-STIFTUNG trading as SCHOTT GLAS, 55122 Mainz (DE)
(72) Erfinder: Elfner, Peter, Dr., 55268 Nieder-Olm (DE); Mühlke, Oliver, 65345 Eitville (DE); Ramdohr, Björn, 55116 Mainz (DE)
(74) Vertreter: Dr. Weitzel & Partner

(57) **Zusammenfassung**

Die Erfindung betrifft ein Verfahren zum Herstellen eines dreidimensionalen, muldenartigen Glaskörpers, der für den häuslichen Gebrauch bestimmt ist und wenigstens eine Auslaßöffnung aufweist.

Die Erfindung ist gekennzeichnet durch folgende Verfahrensschritte:
- es wird ein Glastropfen erzeugt, der eine Temperatur oberhalb der Kristallisationstemperatur des verwendeten Glases hat;
- der Glastropfen wird in eine Preßform eingebracht;
- es wird ein Preßstempel in die Preßform eingefahren, um die Glasmasse in der Preßform zu verpressen und ihr die Grundgestalt des Glaskörpers zu geben;
- der Glaskörper wird so lange abgekühlt, bis er formstabil ist;
- der Glaskörper wird aus der Preßform ausgehoben.

## Beschreibung

Die Erfindung betrifft ein Verfahren zum Herstellen eines dreidimensionalen, muldenartigen Glaskörpers, der für den häuslichen Bereich bestimmt ist und eine Auslaßöffnung aufweist. Die Erfindung betrifft insbesondere eine Dunsthaube zum Anbringen über einem Herd, oder ein Waschbecken. Die Erfindung betrifft ferner solche Glaskörper selbst.

Bei Glaskörpern der genannten Art hat der Werkstoff Glas für den Designer besondere Vorteile und Reize gegenüber herkömmlich verwendeten Werkstoffen wie zum Beispiel Metall. Diese beruhen auf der besonderen Oberfläche, die sich aus Glas erzeugen läßt, sowie aus dessen Verhalten bezüglich der Reflexion beziehungsweise Transmission beziehungsweise Leitung von Licht. Ein weiterer Vorteil liegt im Design selbst.

Zur Zeit ist die Herstellung solcher Glaskörper der genannten Art problematisch beziehungsweise mit erheblichen Nachteilen verbunden: Bei Dunsthauben werden bisher nur einzelne Segmente aus Glas verwendet, die in der Regel in einer Metallrahmenkonstruktion eingesetzt werden. Dabei handelt es sich um Flachglas, das eben oder gebogen sein kann. Glaswaschbecken werden bisher mundgeblasen oder tiefgezogen.

Bei den genannten Verfahren wird üblicherweise eine einheitliche Wandstärke der Glasteile angestrebt. Es resultiert ein schwerer und teurer Glaskörper wie weiter unten beschrieben wird. Auch sind die herstellbaren Größen bei einem mundgeblasenen Glaskörper unter anderem durch das Tropfengewicht eng limitiert. Weiterhin werden in der Regel in ihrer Grundgestalt nur runde beziehungsweise elliptische beziehungsweise gebogene, rechteckige Formen erzeugt.

Bei den genannten Glaskörpern, das heißt sowohl bei einer Dunsthaube als auch bei einem Waschbecken, handelt es sich um Bauteile, in die eine Auslaßöffnung eingebracht werden muß. Diese Öffnung ist bei der Dunsthaube für den Anschluß der Abzugsleitung, bei einem Waschbecken für den Anschluß eines Ablaufrohres nötig.

Aus Gründen der Festigkeit soll der Bereich der Auslaßöffnung dickwandig ausgeführt sein. Zwar kann das mit herkömmlichen Herstellungsverfahren erreicht werden, allerdings ist der ganze Glaskörper dann über den ganzen Körper dickwandig wie oben beschrieben. Das Bauteil wird erstens sehr schwer und zweitens durch das Verwenden von viel Glasmaterial auch recht teuer.

Der Erfindung liegt die Aufgabe zugrunde, ein Verfahren zur Herstellung eines dreidimensionalen, muldenartigen Glaskörpers anzugeben, der für den häuslichen Bereich bestimmt ist und der eine Auslaßöffnung aufweist. Der Bereich der Auslaßöffnung soll eine hohe Festigkeit aufweisen, so daß zum Beispiel eine Anschlußleitung angebracht werden kann.

Diese Aufgabe wird durch die selbständigen Ansprüche gelöst.

Demgemäß wird ein Preßverfahren angewendet. Es wird ein Glastropfen erzeugt, der in eine Preßform gebracht wird. Dieser Glastropfen hat eine Temperatur oberhalb der Kristallisationstemperatur des verwendeten Glases. Nachfolgend wird ein Preßstempel in die Form eingefahren, um die Glasmasse in der Preßform zu verpressen und ihr die Grundgestalt des Glaskörpers zu geben. Anschließend wird der so geformte Glaskörper so lange abgekühlt, bis er formstabil ist, um dann weiter verarbeitet zu werden. In der Regel werden die Auslaßöffnung und die Anschlußleitung nach dem Preßvorgang angebracht. Allerdings ist dies auch in einem früheren Verfahrensschritt denkbar.

Mit diesem Verfahren gewinnt man alle Gestaltungsmöglichkeiten im Hinblick auf das Design des beschriebenen Glaskörpers. Mit diesem Verfahren lassen sich für diese Glasteile dreidimensionale Freiformen erzeugen, die auch erheblich von der Kreisform abweichen können. So können zum Beispiel Glaskörper gepreßt werden, die für den Anwendungsfall gute Strömungseigenschaften aufweisen. Das könnte bedeuten, daß zum Beispiel Fett in der abgesaugten Luft nicht oder nur vermindert an der Innenfläche des Glaskörpers anhaftet beziehungsweise daß die Leistung eines angeschlossenen Ventilators bei gleichem Luftdurchsatz verringert wird.

Die Auslaßöffnung kann zum Beispiel durch Bohren, Stanzen oder durch Absprengen des Glases erfolgen. Auch hier bietet sich aufgrund des hier beschriebenen Herstellungsverfahrens ein besonderer Vorteil; wird der Bereich der Auslaßöffnung dickwandig ausgeführt, so ist dieser Bereich auch unempfindlicher zum Beispiel beim Bohren der Auslaßöffnung. Ist dieser Bereich dünnwandig ausgeführt, so besteht die Gefahr, daß der Glaskörper beim Bohren schnell bricht.

Ganz wichtig ist die Möglichkeit, daß mit diesem Verfahren oben genannte Glaskörper mit unterschiedlichen, definierten Wandstärken D innerhalb des Glaskörpers hergestellt werden können, die den oben beschriebenen Ansprüchen bezüglich einer Auslaßöffnung genügen. Genauer gesagt kann das Vehrältnis von minimaler Wanddicke Dₘᵢₙ zur maximalen Wanddicke Dₘₐₓ in einem Bereich von Dₘᵢₙ/Dₘₐₓ ≤ 1/10 liegen, wobei minimale und maximale Wandstärke aufgrund des Herstellungsverfahrens auf der Höhe des Glaskörpers frei definierbar sind. Die minimale Wandstärke liegt in Abhängigkeit von der Größe des Glaskörpers bei Dₘᵢₙ ≥ 2 mm. Die Erfindung bezieht sich auf die beschriebenen Glaskörper, die eine Länge der inneren Diagonalen von L ≥ 400 mm haben.

Weiterhin wichtig ist, daß durch die Möglichkeit unterschiedliche Wandstärken zu erzeugen, im dickwandigen Bereich weitere Formteile wie zum Beispiel Armaturen abgeschmolzen werden können.

Bei den beschriebenen Glaskörpern kann somit aufgrund des Herstellungsverfahrens Glasmaterial eingespart werden, ohne die Festigkeit des Bauteils zu gefährden. Ferner kann ein solches Bauteil vorgegebenen Festigkeitsbedingungen durch Verstärken der Wanddicke angepaßt werden. Der Glaskörper ist in engen Toleranzen reproduzierbar herstellbar.

Ein weiterer Vorteil dieses Herstellungsverfahrens gegenüber den beschriebenen herkömmlichen Methoden besteht darin, daß eine höhere Schnittzahl (größere Stückzahl pro Zeit) und damit ein höherer Durchsatz erreicht werden kann.

Zusammenfassend werden folgende Merkmale und Eigenschaften des muldenartigen Glaskörpers, der nach dem beschriebenen Verfahren gefertigt wird, hervorgehoben:

Der Glaskörper kann eine freie Formgebung besitzen; er kann strömungsgünstig geformt werden; er kann in einem optimalen Verhältnis von Masse zu Festigkeit gefertigt werden; durch seine Eigenschaft Licht zu leiten, können besondere Lichteffekte erreicht werden; durch hohe Schnittzahlen und damit hohem Durchsatz sowie durch Optimierung erreichtes Einsparen von Glasmasse können gegenüber den herkömmlichen Fertigungsmethoden der beschriebenen Glaskörper Kosten reduziert werden. Durch ein definiertes Abkühlen des gepreßten Glaskörpers nach dem Preßverfahren kann eine Vorspannung des Glaskörpers erreicht werden, so daß bei einer eventuellen Zerstörung des Körpers im Gebrauchszustand dieser in viele kleinkrümelige Teile zerfällt und somit das Verletzungsrisiko minimiert wird.

Die Erfindung ist anhand nachfolgender Zeichnungen näher erläutert. Darin ist im einzelnen folgendes dargestellt:
- Figur 1: zeigt in einem Längsschnitt eine Dunsthaube.
- Figur 2: zeigt in vergrößerter Darstellung einen Ausschnitt aus dem Gegenstand von Figur 1.
- Figur 3: zeigt in einem Längsschnitt ein Waschbecken mit einer Anschlußleitung.
- Figur 4: zeigt in vergrößerter Darstellung einen Ausschnit aus dem Gegenstand von Figur 3.

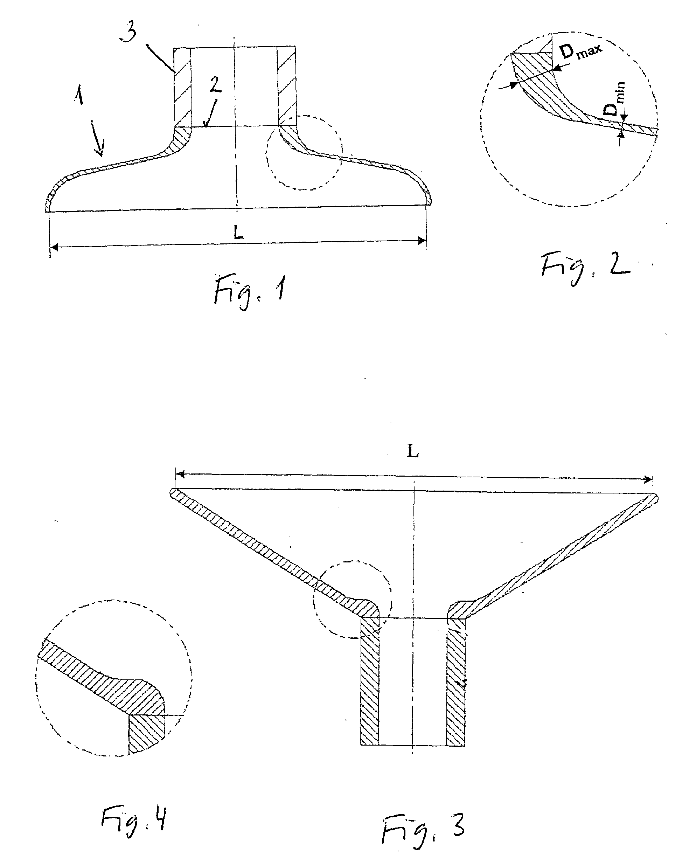

Die Dunsthaube 1 gemäß Figur 1 ist dazu bestimmt, über einem Herd angebracht zu werden. Die Wandstärke der Dunsthaube 1 ist nicht konstant. Sie vergrößert sich gegen eine Auslaßöffnung 2, die sich oben befindet. Der Verlauf der Kontur und damit der Verdickung nach oben hin ist aus Figur 2 gut erkennbar.

An die Auslaßöffnung 2 ist ein Rohrstutzen 3 angeschlossen. Die Verdickung der Wandung der Dunsthaube gegen den Rohrstutzen 3 ist eine kontinuierliche.

Das in den Figuren 3 und 4 dargestellte Waschbecken 10 weist ebenfalls eine Auslaßöffnung 20 auf. An diese ist ein Rohrstutzen 30 zum Anschließen an eine hier nicht dargestellte Leitung angeschlossen.

Das muldenförmige Waschbecken 10 ist in seinem unteren Bereich verdickt - siehe Figur 4.

## Patentansprüche

1. Verfahren zum Herstellen eines dreidimensionalen, muldenartigen Glaskörpers, der für den häuslichen Gebrauch bestimmt ist und wenigstens eine Auslaßöffnung aufweist, **gekennzeichnet durch** folgende Verfahrensschritte:
1.1 es wird ein Glastropfen erzeugt, der eine Temperatur oberhalb der Kristallisationstemperatur des verwendeten Glases hat;
1.2 der Glastropfen wird in eine Preßform eingebracht;
1.3 es wird ein Preßstempel in die Preßform eingefahren, um die Glasmasse in der Preßform zu verpressen und ihr die Grundgestalt des Glaskörpers zu geben;
1.4 der Glaskörper wird so lange abgekühlt, bis er formstabil ist;
1.5 der Glaskörper wird aus der Preßform ausgehoben.

2. Verfahren nach Anspruch 1, **dadurch gekennzeichnet, daß** der gepreßte Glaskörper über seiner Kontur Bereiche unterschiedlicher Wanddicken aufweist.

3. Verfahren nach Anspruch 1 oder 2, **dadurch gekennzeichnet, daß** der Glaskörper nach dem Pressen kontrolliert abgekühlt wird, um eine Vorspannung des Glases zu erreichen.

4. Verfahren nach einem der Ansprüche 1 bis 3, **dadurch gekennzeichnet, daß** dem Glaskörper Gegenstände eingeschmolzen werden, beispielsweise Anschlußarmatur-Teile.

5. Verfahren nach Anspruch 4, **dadurch gekennzeichnet, daß** dem Glaskörper Gegenstände im Bereich der Auslaßöffnung angeschmolzen werden, die sowohl aus Glas oder anderen Materialien wie zum Beispiel Metall bestehen, beispielsweise als Stutzen im Bereich der Auslaßöffnung.

6. Verfahren nach Anspruch 4 oder 5, **dadurch gekennzeichnet, daß** die Gegenstände aus Glas bestehen, vorgespannt sind und nach dem Fügen im Bereich der Fügenaht thermisch nachbehandelt werden.

7. Verfahren nach Anspruch 1 bis 4, **dadurch gekennzeichnet, daß** dem Glaskörper nach dem Pressen Gegenstände im Bereich der Auslaßöffnung angeklebt werden, die aus Glas oder anderen Materialien wie zum Beispiel Metall bestehen, beispielsweise Stutzen im Bereich der Auslaßöffnung.

8. Verfahren nach Anspruch 7, **dadurch gekennzeichnet, daß** die angeklebten Gegenstände aus Glas bestehen und vor dem Ankleben vorgespannt werden.

9. Verfahren nach einem der Ansprüche 1 bis 8, **dadurch gekennzeichnet, daß** die Oberfläche des Glaskörpers nach seinem Herausnehmen aus der Preßform bearbeitet wird, beispielsweise durch Sandstrahlen oder chemische Behandlung.

10. Verfahren nach einem der Ansprüche 1 bis 9, **dadurch gekennzeichnet, daß** auf der Oberfläche des Glaskörpers nach seinem Herausnehmen aus der Preßform Funktionsschichten aufgebracht werden, beispielsweise eine Anti-Statik-Schicht, eine hydrophobe Schicht, eine oliophobe Schicht, eine Farbschicht.

11. Verfahren nach einem der Ansprüche 1 bis 10, **dadurch gekennzeichnet, daß** der Glaskörper eine Dunsthaube ist.

12. Verfahren nach einem der Ansprüche 1 bis 11, **dadurch gekennzeichnet, daß** der Glaskörper ein Waschbecken ist.

13. Muldenartiger Glaskörper für den häuslichen Bereich mit wenigstens einer Auslaßöffnung, **gekennzeichnet durch** die Herstellung mittels eines Verfahrens gemäß Ansprüchen 1 bis 12.
